# EUROPÄISCHE PATENTSCHRIFT

(11) **EP 1 634 739 B1**
(45) Veröffentlichungstag und Bekanntmachung des Hinweises auf die Patenterteilung: **28.10.2009**
(21) Anmeldenummer: 05019431.5
(22) Anmeldetag: 07.09.2005
(51) Int. Cl.: B60H 1/34

(54) **Luftausströmer, insbesondere für ein Fahrzeug**
Air outlet, in particular for a vehicle
Aérateur, notamment pour un véhicule

(30) Priorität: 09.09.2004 DE 102004043696
(43) Veröffentlichungstag der Anmeldung: 15.03.2006
(73) Patentinhaber: TRW Automotive Electronics & Components GmbH, 78315 Radolfzell (DE)
(72) Erfinder: Krause, Reinhard, 95615 Marktredwitz-Brand (DE); Steinbeiss, Sabine, 95100 Selb (DE)
(74) Vertreter: Prinz & Partner

(56) Entgegenhaltungen:
- EP-A- 0 803 388
- DE-A1- 2 805 517
- DE-U- 1 983 964
- FR-A- 2 585 637
- US-A- 4 735 131
- US-A1- 2003 157 880

## Beschreibung

Die Erfindung betrifft einen Luftausströmer, insbesondere für ein Fahrzeug, nach dem Oberbegriff des Anspruchs 1.

Luftausströmer sind in den verschiedensten Ausgestaltungen bekannt. Sie dienen allgemein dazu, das Volumen und die Richtung eines Luftstroms, der einem Fahrzeuginnenraum zur Klimatisierung zugeführt wird, in der gewünschten Weise einzustellen. Übliche Bestandteile sind zum einen eine Absperrklappe, mittels der das Volumen des Luftstroms eingestellt werden kann, sowie mehrere Lamellen, mittels denen die Richtung des Luftstroms bestimmt werden kann.

Es gibt verschiedene Ansätze, diese Luftausströmer in einer optisch ansprechenden Weise zu gestalten. So sind Bedienräder, Verstellringe und innenliegende Hebel bekannt, mit denen die Lamellen und die Absperrklappe verbunden sind, oder Schiebeknöpfe, die auf den Lamellen liegen.

Aus der gattungsbildenden FR 2 585 637 A1 ist ein Luftausströmer bekannt, der eine Absperrklappe, Horizontal- und Vertikallamellen aufweist. Die Absperrklappe und/oder die Lamellen können verstellt werden. Dabei wird kein Schiebeelement verwendet.

Die US 4,735,131 A1 beschreibt Horizontal- und Vertikallamellen. Die Horizontallamellen werden von einem Knopf verstellt, der Teil einer Lamelle ist, und die Vertikallamellen werden über einen horizontal verschiebbaren Knopf verstellt.

Die Aufgabe der Erfindung besteht darin, einen Luftausströmer zu schaffen, der optisch ansprechend gestaltet ist.

Zu diesem Zweck sieht die Erfindung einen Luftausströmer, insbesondere für ein Fahrzeug, mit den Merkmalen des Anspruchs 1 vor. Die mit der Erfindung erzielten Vorteile bestehen insbesondere darin, daß der Luftausströmer kompakt ausgeführt ist, einfach zu bedienen ist und keine Bedienelemente auf den Lamellen angeordnet sind.

Vorzugsweise weist der Luftausströmer eine Blende auf, die rund ist. Dadurch wird eine Optik erreicht, die den Kundenwünschen entspricht. Natürlich könnte die Blende auch eckig sein.

Das erste Schiebeelement steht bevorzugt über eine Gabel, die an ihrem einen Ende beweglich in einer Führung des Schiebeelements liegt, und eine Zwischenstange mit wenigstens einer Horizontallamelle in Verbindung. Dadurch ist eine einfache, effektive Koppelung gewährleistet.

Vorzugsweise weist die Gabel eine Führung auf, in der sich die Zwischenstange bewegen kann. Auf Grund der Führung kann eine einfache Montage ermöglicht werden.

Vorzugsweise stehen die Horizontallamellen über wenigstens eine Koppelstange miteinander in Verbindung. Dies erspart eine direkte Koppelung der einzelnen Lamellen an das Schiebeelement und gewährleistet so eine kompakte Bauweise.

Die Horizontallamellen decken bevorzugt den Luftaustrittskanal in einer Stellung vollständig ab. Dies ist nur möglich, da kein Bedienelement auf der Lamelle selbst angeordnet ist. Dadurch wird eine ansprechende, einheitliche Optik des Luftausströmers ermöglicht.

Vorzugsweise steht die Verbindungsstange mit wenigstens einer Vertikallamelle in Verbindung und diese über wenigstens eine Koppelstange mit den restlichen Vertikallamellen in Verbindung. Auf diese Weise entfällt eine direkte Koppelung sämtlicher Vertikallamellen mit dem Schiebeelement und es wird eine kompakte Bauweise gewährleistet.

Die Vertikallamellen sind bevorzugt über eine Schiene an einem Gehäuse befestigt, wobei die Schiene Rastelemente aufweist, die an dem Gehäuse einrasten. Die Rastverbindung ermöglicht hierbei eine schnelle und einfache Montage.

Vorzugsweise ist die Absperrklappe schwenkbar an dem Gehäuse gelagert und kann den Lufteintrittskanal luftdicht verschließen. Somit kann auf Wunsch des Fahrzeuginsassen der Luftstrom in das Fahrzeuginnere vollkommen ausgeschlossen werden.

Weitere Merkmale und Vorteile der Erfindung ergeben sich aus den Unteransprüchen. Die Erfindung wird nachfolgend anhand der bevorzugten Ausführungsform beschrieben, die in den Zeichnungen dargestellt ist. In den Zeichnungen zeigen:
- Figur 1 eine perspektivische Ansicht eines erfindungsgemäßen Luftausströmers;
- Figur 2 eine perspektivische Ansicht des Luftausströmers von Figur 1 ohne Gehäuse; und
- Figur 3 eine Seitenansicht des Luftausströmers.

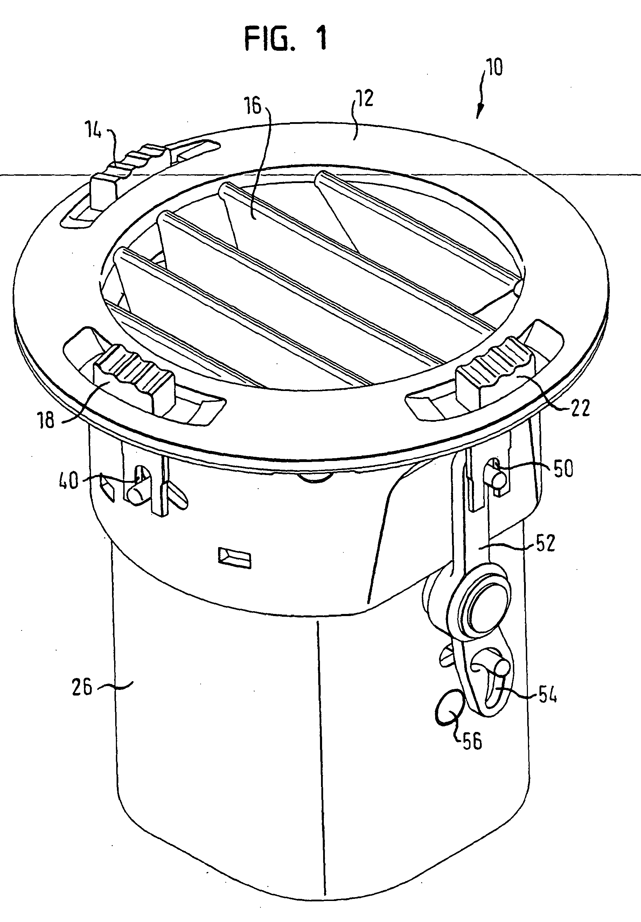

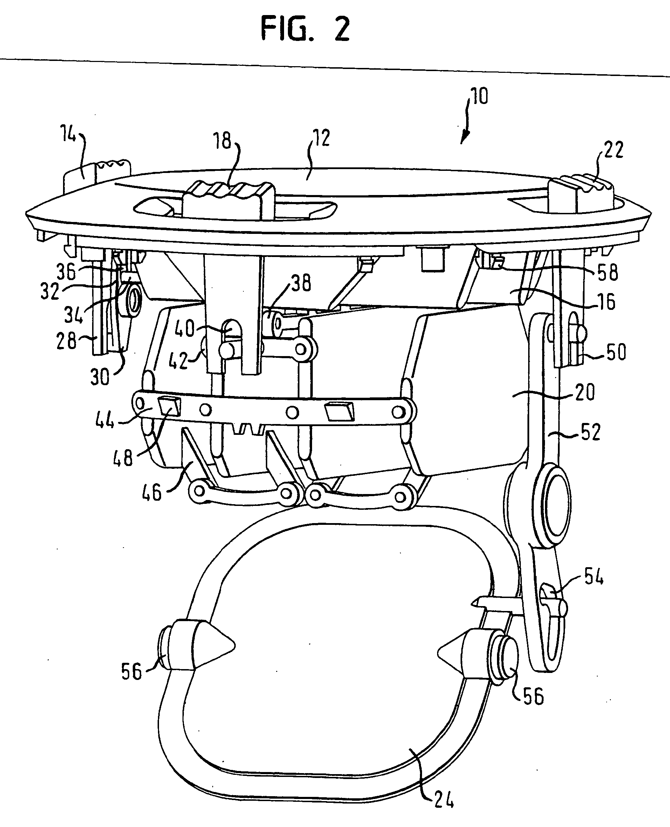

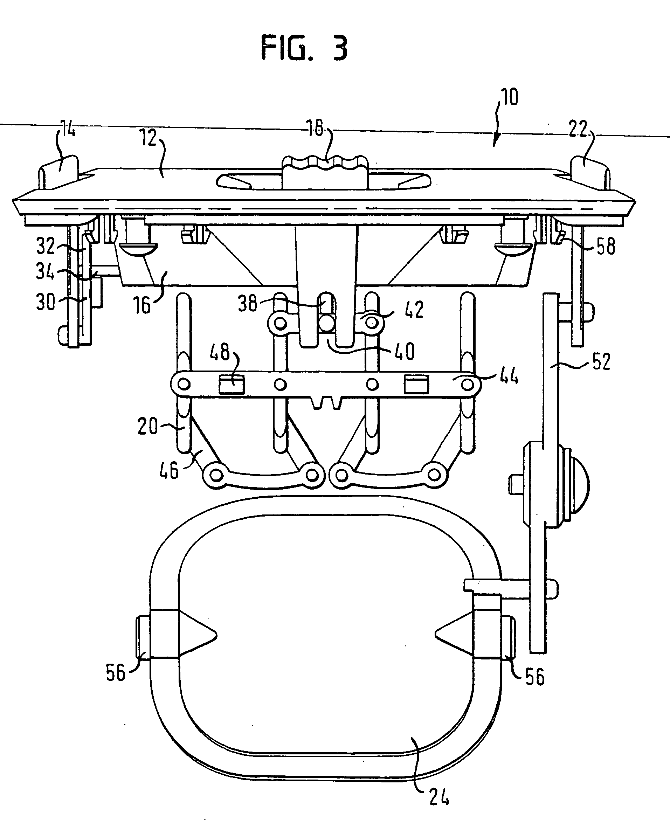

Figur 1 zeigt einen Luftausströmer 10 für eine Fahrzeugbelüftung. Um die Richtung des Luftstroms und das Volumen des Luftstroms zu regulieren, weist der Luftausströmer 10 mehrere Horizontallamellen 16, Vertikallamellen 20 und eine Absperrklappe 24 auf (siehe auch Figuren 2 und 3).

Der Luftausströmer 10 weist ein Gehäuse 26 auf. Das Gehäuse 26 umgibt den Luftausströmer 10. Das Gehäuse 26 hat im unteren Abschnitt eine rechteckförmige Grundfläche und weitet sich im oberen Abschnitt auf.

Der Luftausströmer 10 weist einen Lufteintrittskanal und einen Luftaustrittskanal auf. Dabei erstreckt sich der Lufteintrittskanal bis zu den Vertikallamellen 20, der Luftaustrittskanal von den Vertikallamellen 20 bis zu einer Blende 12.

Die für den Fahrzeuginsassen sichtbare Blende 12 des Luftausströmers 10 ist rund und weist Aussparungen auf, die seitlich abgeflacht ausgeführt sind, um eine optisch ansprechende Struktur zu erreichen. In den Aussparungen der Blende 12 sind Schiebeelemente 14, 18 und 22 vorgesehen, die den Horizontallamellen 16, den Vertikallamellen 20 und der Absperrklappe 24 zugeordnet sind (siehe auch Figuren 2 und 3).

Das erste Schiebeelement 14 bewegt die Horizontallamellen 16 (Figur 2). Es weist eine Führung 28 auf, in der sich das untere Ende einer Gabel 30, insbesondere ein Stift dieser Gabel 30, bewegen kann. Die Gabel 30 weist zwei oder mehr Stege 32 auf, die eine Führung 36 bilden. In der Führung 36 befindet sich mindestens eine Zwischenstange 34, die seitlich von den Stegen 32 gehalten wird und mit wenigstens einer Horizontallamelle 16 in Verbindung steht. Die restlichen Horizontallamellen 16 sind über eine Koppelstange 38 mit der Horizontallamelle 16 verbunden, die durch die Zwischenstange 34 direkt an das Schiebeelement 14 gekoppelt ist.

Es sind fünf Horizontallamellen 16 vorgesehen, die parallel zueinander angeordnet sind. Sie sind in ihrer geometrischen Form unterschiedlich ausgeführt. So hat die mittlere Horizontallamelle 16, die direkt mit der Zwischenstange 34 an dem Schiebeelement 14 gekoppelt ist, eine Länge, die dem Durchmesser der Innenaussparung der Blende 12 und somit dem Durchmesser des Luftaustrittskanals entspricht, und ist rechteckig ausgeführt. Die beiden äußersten Horizontallamellen 16 weisen die kleinste Länge auf und sind trapezförmig ausgeführt. Durch diese Formgebung der Horizontallamellen 16 kann die Innenöffnung der runden Blende 12 und somit der Luftaustrittskanal vollständig abgedeckt werden.

Das zweite Schiebeelement 18 bewegt die Vertikallamellen 20 und weist eine Führung 40 auf. In diese Führung 40 greift ein Stift einer Verbindungsstange 42 ein. Die Verbindungsstange 42 ist an die inneren Vertikallamellen 20 gekoppelt und greift an dem oberen Abschnitt der Vertikallamellen 20 an. Eine Verbindung der äußeren Vertikallamellen 20 mit den inneren Vertikallamellen 20 erfolgt über Koppelstangen 46. Eine Koppelstange 46 weist zwei oder mehr Stäbe auf, die über Gelenke miteinander verbunden sind, wobei ein Stab an die innere Vertikallamelle 20 und einer an die äußere Vertikallamelle 20 gekoppelt ist. Die Koppelstangen 46 sind zueinander geneigt und gewährleisten eine platzsparende Koppelung der Vertikallamellen 20.

Die Schiene 44 ist in dem mittleren Abschnitt der Vertikallamellen 20 angeordnet. Diese verbindet die Vertikallamellen 20 untereinander. Sie weist zudem Rastelemente 48 auf, mittels der sie am Gehäuse 26 befestigt werden kann (Figur 1). Die Rastelemente 48 greifen dabei in Aussparungen im Gehäuse 26 ein.

Es sind vier Vertikallamellen 20 vorgesehen, die parallel zueinander angeordnet sind und in etwa rechtwinklig zu den Horizontallamellen 16 angeordnet sind. Die äußeren Vertikallamellen 20 weisen Abschrägungen auf, um auch in der geschlossenen Stellung im Gehäuse 26 Platz zu finden. Die Vertikallamellen 20 samt Abschrägungen lenken den Luftstrom ab.

Das dritte Schiebeelement 22 steuert die Absperrklappe 24 und weist eine Führung 50 auf, in die ein Stift eingreift, der an dem oberen Ende eines Hebels 52 angebracht ist. Der Hebel 52 weist an seinem unterem Ende eine halbkreisförmige Führung 54 auf. In diese halbkreisförmige Führung 54 greift ein Stift der Absperrklappe 24 ein.

Die Absperrklappe 24 ist in dieser Ausführungsform rechteckig ausgebildet. Die rechteckige Form gewährleistet, daß die Absperrklappe 24 den Lufteintrittskanal luftdicht verschließen kann, da das Gehäuse 26 in diesem Bereich gleichermaßen rechteckig ausgeführt ist. Die Absperrklappe 24 weist einen umlaufenden Abschnitt auf, der zum Luftkanal abdichtet.

Die Absperrklappe 24 weist zudem zylinderförmige Fortsätze 56 auf, die in dem Gehäuse 26 eingreifen und die Lage fixieren, jedoch eine Drehbewegung der Absperrklappe 24 nicht behindern.

Figuren 2 und 3 zeigen Befestigungselemente 58, mit denen die Blende 12 am Gehäuse 26 befestigt werden kann. Die Befestigungselemente 58 sind kreisförmig an der Blende 12 angeordnet und gewährleisten eine leichte und sichere Montage, ohne die Funktionsweise der Schiebeelemente 14, 18 und 22 zu beeinträchtigen. Darüber hinaus können Verbindungsmittel wie Schrauben die Verbindung sichern.

Wenn sich die Schiebeelemente 14, 18 und 22 in der sogenannten Mittelstellung befinden, wie in Figur 1 gezeigt, sind die Horizontallamellen 16 und die Vertikallamellen 20 vollständig geöffnet, und die Absperrklappe 24 verschließt den Lufteintrittskanal teilweise.

Falls das erste oder zweite Schiebeelement 14, 18 aus der Mittelstellung bewegt wird, bewirkt dies, daß die Horizontal- bzw. Vertikallamellen 16, 20 den Luftstrom entweder in der einen oder in der anderen Richtung ablenken. Beim Bewegen des dritten Schiebeelements 22 aus der Mittelstellung bewegt sich der Stift in der halbkreisförmigen Führung 54 entweder nach unten oder nach oben und verschließt den Lufteintrittskanal somit luftdicht bzw. öffnet den Lufteintrittskanal vollständig, um einen ungehinderten Luftstrom zu ermöglichen.

## Patentansprüche

1. Luftausströmer, insbesondere für ein Fahrzeug, mit einem Luftaustrittskanal und mehreren Bedienelementen, die die Austrittsrichtung und den Volumenstrom regulieren,
**dadurch gekennzeichnet, daß**
die Bedienelemente als Schiebeelemente (14, 18, 22) ausgebildet sind, wobei ein erstes Schiebeelement (14) Horizontallamellen (16) bewegt, ein zweites Schiebeelement (18) Vertikallamellen (20) und ein drittes Schiebeelement (22) eine Absperrklappe (24) und
wobei das dritte Schiebeelement (22) über einen Hebel (52) mit der Absperrklappe (24) in Verbindung steht.

2. Luftausströmer nach Anspruch 1, **dadurch gekennzeichnet, daß** der Luftausströmer (10) eine Blende (12) aufweist, die rund ist.

3. Luftausströmer nach Anspruch 1 oder 2, **dadurch gekennzeichnet, daß** das erste Schiebeelement (14) über eine Gabel (30), die an ihrem einen Ende beweglich in einer Führung (28) des Schiebeelements (14) liegt, und eine Zwischenstange (34) mit wenigstens einer Horizontallamelle (16) in Verbindung steht.

4. Luftausströmer nach Anspruch 3, **dadurch gekennzeichnet, daß** die Gabel (30) zwei Stege (32) aufweist, die die Zwischenstange (34) seitlich halten.

5. Luftausströmer nach Anspruch 3 oder 4, **dadurch gekennzeichnet, daß** die Gabel (30) eine Führung (36) aufweist, in der sich die Zwischenstange (34) bewegen kann.

6. Luftausströmer nach Anspruch 3 bis 5, **dadurch gekennzeichnet, daß** die Horizontallamellen (16) über wenigstens eine Koppelstange (38) miteinander in Verbindung stehen.

7. Luftausströmer nach Anspruch 3 bis 6, **dadurch gekennzeichnet, daß** die Horizontallamellen (16) in einer Stellung den Luftaustrittskanal vollständig abdecken.

8. Luftausströmer nach einem der vorhergehenden Ansprüche, **dadurch gekennzeichnet, daß** das zweite Schiebeelement (18) eine Führung (40) aufweist, in die ein Stift einer Verbindungsstange (42) eingreift.

9. Luftausströmer nach Anspruch 8, **dadurch gekennzeichnet, daß** die Verbindungsstange (42) mit wenigstens einer Vertikallamelle (20) in Verbindung steht und diese über wenigstens eine Koppelstange (46) mit den restlichen Vertikallamellen (20) in Verbindung steht.

10. Luftausströmer nach Anspruch 8 oder 9, **dadurch gekennzeichnet, daß** die Vertikallamellen (20) über eine Schiene (44) an einem Gehäuse (26) befestigt sind, wobei die Schiene (44) Rastelemente (48) aufweist, die an dem Gehäuse (26) einrasten.

11. Luftausströmer nach einem der vorhergehenden Ansprüche, **dadurch gekennzeichnet, daß** der Hebel (52) an seinem oberen Ende einen Stift aufweist, der sich in einer Führung (50) des Schiebeelements (22) bewegt.

12. Luftausströmer nach einem der vorhergehenden Ansprüche, **dadurch gekennzeichnet, daß** der Hebel (52) an seinem unteren Ende eine halbkreisförmige Führung (54) aufweist, in der sich ein Stift der Absperrklappe (24) bewegt.

13. Luftausströmer nach einem der vorhergehenden Ansprüche, **dadurch gekennzeichnet, daß** die Absperrklappe (24) schwenkbar an dem Gehäuse (26) gelagert ist und den Lufteintrittskanal luftdicht verschließen kann.

## Claims

1. An air vent, in particular for a vehicle, comprising an air outflow channel and a plurality of operating elements which regulate the outflow direction and the volume flow rate,
**characterized in that**
the operating elements are designed as sliding elements (14, 18, 22), a first sliding element (14) moving horizontal vanes (16), a second sliding element (18) moving vertical vanes (20), and a third sliding element (22) moving a shutoff flap (24), and
the third sliding element (22) communicating with the shutoff flap (24) via a lever (52).

2. The air vent according to claim 1, **characterized in that** the air vent (10) includes a cover (12) which is round.

3. The air vent according to claim 1 or 2, **characterized in that** the first sliding element (14) communicates with at least one horizontal vane (16) via a fork (30) which is movably disposed at one end thereof in a guide (28) of the sliding element (14), and via an intermediate rod (34).

4. The air vent according to claim 3, **characterized in that** the fork (30) includes two webs (32) laterally holding the intermediate rod (34).

5. The air vent according to claim 3 or 4, **characterized in that** the fork (30) includes a guide (36) in which the intermediate rod (34) can move.

6. The air vent according to claims 3 to 5, **characterized in that** the horizontal vanes (16) communicate with each other via at least one coupling rod (38).

7. The air vent according to claims 3 to 6, **characterized in that** in one position the horizontal vanes (16) cover the air outflow channel completely.

8. The air vent according to any of the preceding claims, **characterized in that** the second sliding element (18) includes a guide (40) in which a pin of a connecting rod (42) engages.

9. The air vent according to claim 8, **characterized in that** the connecting rod (42) communicates with at least one vertical vane (20), and the latter communicates with the remaining vertical vanes (20) via at least one coupling rod (46).

10. The air vent according to claim 8 or 9, **characterized in that** the vertical vanes (20) are secured to a housing (26) via a rail (44), the rail (44) including latching elements (48) locking into place at the housing (26).

11. The air vent according to any of the preceding claims, **characterized in that** at its upper end the lever (52) includes a pin moving in a guide (50) of the sliding element (22).

12. The air vent according to any of the preceding claims, **characterized in that** at its lower end the lever (52) includes a semicircular guide (54) in which a pin of the shutoff flap (24) moves.

13. The air vent according to any of the preceding claims, **characterized in that** the shutoff flap (24) is pivotally mounted on the housing (26) and is adapted to hermetically close the air inflow channel.

## Revendications

1. Aérateur, en particulier pour un véhicule, comportant un canal de sortie d'air et plusieurs éléments de réglage qui règlent la direction de sortie et le débit volumétrique,
**caractérisé en ce que**
les éléments de réglage sont réalisés sous forme d'éléments coulissants (14, 18, 22), un premier élément coulissant (14) imprimant un mouvement à des lamelles horizontales (16), un deuxième élément coulissant (18) imprimant un mouvement à des lamelles verticales (20) et un troisième élément coulissant (22) imprimant un mouvement à un clapet d'obturation (24), et
le troisième élément coulissant (22) étant en liaison avec le clapet d'obturation (24) via un levier (52).

2. Aérateur selon la revendication 1, **caractérisé en ce que** l'aérateur (10) présente un cadre (12) qui est rond.

3. Aérateur selon la revendication 1 ou 2, **caractérisé en ce que** le premier élément coulissant (14) est en liaison avec au moins une lamelle horizontale (16) via une fourche (30), qui est agencée mobile à l'une de ses extrémités dans un guidage (28) de l'élément coulissant (14), et via une tige intermédiaire (34).

4. Aérateur selon la revendication 3, **caractérisé en ce que** la fourche (30) présente deux barrettes (32) qui maintiennent latéralement la tige intermédiaire (34).

5. Aérateur selon la revendication 3 ou 4, **caractérisé en ce que** la fourche (30) présente un guidage (36) dans lequel la tige intermédiaire (34) peut se déplacer.

6. Aérateur selon les revendications 3 à 5, **caractérisé en ce que** les lamelles horizontales (16) sont en liaison les unes aux autres via au moins une tige d'accouplement (38).

7. Aérateur selon les revendications 3 à 6, **caractérisé en ce que** dans une position, les lamelles horizontales (16) couvrent entièrement le canal de sortie d'air.

8. Aérateur selon l'une des revendications précédentes, **caractérisé en ce que** le deuxième élément coulissant (18) présente un guidage (40) dans lequel s'engage une broche d'une tige de liaison (42).

9. Aérateur selon la revendication 8, **caractérisé en ce que** la tige de liaison (42) est en liaison avec au moins une lamelle verticale (20), et celle-ci est en liaison avec les autres lamelles verticales (20) via au moins une tige d'accouplement (46).

10. Aérateur selon la revendication 8 ou 9, **caractérisé en ce que** les lamelles verticales (20) sont fixées sur un boîtier (26) via un rail (44), le rail (44) présentant des éléments d'enclenchement (48) qui s'enclenchent sur le boîtier (26).

11. Aérateur selon l'une des revendications précédentes, **caractérisé en ce que** le levier (52) présente à son extrémité supérieure une broche qui se déplace dans un guidage 850) de l'élément coulissant (22).

12. Aérateur selon l'une des revendications précédentes, **caractérisé en ce que** le levier (52) présente à son extrémité inférieure un guidage (54) de forme semi-circulaire dans lequel se déplace une broche du clapet d'obturation (24).

13. Aérateur selon l'une des revendications précédentes, **caractérisé en ce que** le clapet d'obturation (24) est monté pivotant sur le boîtier (26) et peut fermer le canal d'entrée d'air de façon hermétique.
